# EUROPEAN PATENT SPECIFICATION

(11) **EP 1 046 071 B1**
(45) Date of publication and mention of the grant of the patent: **27.03.2002**
(21) Application number: 98965811.7
(22) Date of filing: 14.12.1998
(51) Int. Cl.: G02B 6/38, G02B 6/42, G01M 11/00

(54) **POLARIZATION-MAINTAINING CONNECTOR**
POLARISATIONSERHALTENDER STECKER
CONNECTEUR A MAINTIEN DE LA POLARISATION

(30) Priority: 08.01.1998 EP 98100185; 16.01.1998 US 71724 P
(43) Date of publication of application: 25.10.2000
(73) Proprietor: Corning O.T.I. SPA, 20126 Milano (IT)
(72) Inventor: PIANCIOLA, Aurelio, I-27045 Casteggio (IT); SCOTTI, Simona, I-27058 Voghera (IT)
(74) Representative: Grunfeld, David Peter
(86) International application number: EP9808084
(87) International publication number: WO9935524

(56) References cited:
- EP-A- 0 246 165
- WO-A-96/37792
- US-A- 4 919 509
- US-A- 5 216 733
- US-A- 5 666 449

## Description

The present invention relates to the field of connectors for polarization-maintaining fibres. In particular, the present invention relates to optical fibres within which light beams polarized in predetermined directions travel, and which are connected to optical devices by means of the said connectors.

Polarization-maintaining fibres (PMF) are characterized in that they maintain the polarization of the input signal throughout their length, if this polarization is orientated in one of the two directions of polarization of the fibre.

In particular, these fibres have two principal axes of propagation of the optical signal within them, called the "slow" axis and the "fast" axis. The said axes are substantially perpendicular to each other and have different characteristics. The fast axis has a refractive index which is substantially lower than that of the slow axis, and therefore enables the light beam polarized in the same direction to travel along the fibre at a higher phase velocity than that of the light beam polarized in the direction of the slow axis. In both directions, however, the signal is kept substantially unaltered at the output of the fibre.

The connectors for this type of fibre generally have a distinctive sign which identifies an axis with which the axis of polarization of the fibre has to be aligned. In this way, after the final assembly of the connector and fibre, the axis of polarization of the fibre can be recognized from the outside; consequently, if the signal sent along the fibre is polarized consistently with the said axis of the fibre, the polarization of the signal can be recognized by identifying this distinctive sign on the body of the connector. The said distinctive sign is also called the connector key.

Additionally, the connector key is generally associated with means for coupling the connector to an optical unit or to a bush which permits joining to another section of polarization-maintaining fibre. These means associated with the connector key provide a unique axial position of coupling to the exterior in such a way that the polarization of the signal is maintained beyond the connector.

A parameter which can be used to evaluate the efficiency of a polarization-maintaining fibre and the efficiency of the joint between the fibre and a connector is the extinction ratio (ER), defined as the logarithm of the ratio between the power connected to one of the two principal axes of the maintaining fibre and that connected to the other perpendicular axis along which power is not to be sent; (another conventionally used definition is the logarithm of the ratio between the power connected to the non-excited axis and the total power).

In particular, this parameter is of fundamental importance in the evaluation of the efficiency of a method for coupling these polarization-maintaining fibres to a connector. The connection provides for the alignment between one of the axes, slow or fast, of polarization of the fibre and that of the connector, defined by the position of the key. If this alignment is imperfect when the fibre has been connected to another fibre or to an optical unit, the extinction ratio decreases significantly and consequently the connection causes a degradation of the transmitted signal.

To obtain the best extinction ratio characteristics in terms of repeatability, it is known that, with polarization-maintaining fibres, it is preferable to use connectors called the SC type rather than connectors called the FC type. An SC type connector provides engagement by insertion, in a bush for example, while an FC type connector provides engagement by screwing the connector on to the bush, thereby carrying out a rotation which may generate residual torsions, resulting in a low repeatability of the connection operation.

In US Patent No. 4,792,205, the optical axes of the PMF are aligned by using a method of visual alignment of the geometrical axes of the fibre disposed inside the ferrule capable of rotating with the fibre inside it, by means of observation through a microscope and a fixed reference grid. Once the optimal visual alignment has been determined, the ferrule is finally locked inside the connector.

To obtain a greater precision of alignment, active alignment is used; this consists in sending a polarized light beam along the fibre and, by means of optical power meters, measuring at the output the power sent along the fibre emerging from the connector. This method requires a system comprising polarizers aligned with geometrical references with respect to which the axes of birefringence of the fibre are positioned.

US Patent No. 4,919,509 describes a connection between polarization-maintaining fibres comprising a first and a second ferrule, each of which has a longitudinal through hole which terminates in a vertical wall at one end of the ferrule; two polarization-maintaining fibres which are inserted into the ferrules, without their external protective covering and having the same cross section as the through holes in the ferrules, which terminate at the said vertical walls; means of position recognition associated with each ferrule, which enable the ferrules to be disposed in the preferred position for a polarization-maintaining connection; and means which enable the said first and second ferrule to be connected together longitudinally in the said preferred position in such a way that the axis of polarization of the first fibre is aligned with the axis of polarization of the second fibre.

US Patent No. 5,216,733 describes a polarization-maintaining connector which is capable of connecting two polarization-maintaining fibres or connecting one fibre of this type to an optical unit, and which comprises a ferrule having a through hole into which the fibre can be inserted, a flange having a key for fitting the said ferrule on to it, and means for engaging the said flange with the external circumference of the ferrule.

This patent also describes a method of assembling a connector to produce a connection between two polarization-maintaining optical fibres or between one fibre of this type and an optical unit, comprising the stages of:
- fixing the end of a polarization-maintaining optical fibre to the end of the body of a ferrule by means of an adhesive;
- grinding the said end of the ferrule and simultaneously the end of the fibre;
- visually aligning a flange, by means of a key present on it, with the axis of polarization of the fibre;
- fitting the said flange on to the body of the ferrule;
- rotating the body of the ferrule in such a way as to align the key of the flange with the axis of polarization of the fibre in the ferrule, while observing the ground terminal part of the said fibre;
- securing the flange in the body of the ferrule.

The patent application WO9637792 describes a connector subassembly for non-cylindrically symmetrical optical elements comprising a holding member for an optical element, wherein said holding member comprises at least an alignment feature, an inner sleeve member comprising at least one co-operative alignment feature adapted to engage the alignment feature on holding member and a housing with an interior surface adapted to receive said holding member and said inner sleeve member, and an external surface comprising a rotational alignment reference.
Said holding member is freely rotatable with respect to said housing to rotationally align said optical element at an optimal angle with respect to said reference on the housing.

According to the present invention, an alignment procedure has been discovered which enables a high-precision geometrical reference to be formed on a flat work surface by means of a polarized light beam sent along the fibre. The alignment process is based on the fact that the said geometrical reference, actively determined and coinciding with the axis of the connector key, is used to align the fibre with it.

It has also been discovered, in particular, that if the alignment of the connector with the axis of polarization of the fibre is carried out after the process of assembling the said connector, errors and imperfections due to the mechanical tolerances of the various parts of which the connector consists are avoided. Consequently the connector made according to the present invention has characteristics which enable the axis of polarization of the fibre to be aligned with the key of the connector and with a reference plane after the stage of assembly of the said connector.

The present invention relates to a method of determining the axis of polarization of polarization-maintaining fibres, comprising:
- a) sending a polarized optical signal along a polarization-maintaining fibre;
- b) emitting said polarized optical signal from one end of the said fibre in the form of a light beam directed along an optical axis and oriented along one of the two axes of polarization of the said fibre;
- c) inserting a polarizer having at least one axis of maximum or minimum transmissivity between the fibre and an optical power meter, in such a way that the optical axis of propagation of the beam passes through the polarizer, and with one of the said axes oriented in a predetermined position with respect to a reference plane. The method further comprises:
- d) rotating the said polarizer about an axis parallel to the said optical axis until a minimum output power is measured by means of the optical power meter;
- e) recording this angular position reached by the polarizer in the preceding step;
- f) rotating the polarizer about an axis so as to bring its rear face in front of the emitting end of the fibre;
- g) rotating the polarizer about an axis parallel to the said optical axis until the said minimum output power is measured;
- h) recording the angular position reached by the polarizer in the preceding step;
- i) rotating the polarizer about an axis parallel to the said optical axis through an angle corresponding to half the difference between the two angles measured in the two preceding rotations;
- j) rotating the optical fibre about the optical axis (67) in such a way as to orientate one of its axes of polarization until the said minimum output power is substantially measured on the meter;
- k) repeating steps d) to j) until the angle of the rotation carried out in step i) becomes within a required degree of precision;
- l) identifying the axis of polarization of the fibre (F) with the orientated axis of the polarizer.

Preferably, the method further comprises, between steps b) and c):
- observing the end of the polarization-maintaining fibre under a microscope;
- rotating the fibre about the optical axis into a position with one of the two axes of polarization substantially orthogonal to the reference plane.

Preferably, the said polarized optical signal is oriented along the slow axis of polarization of the fibre.

Preferably, the axis of polarization of the fibre is oriented orthogonally to the reference plane and the axis of maximum transmissivity of the polarizer is aligned parallel to the reference plane.

In particular, the said step of sending a polarized optical beam along a polarization-maintaining fibre can comprise connecting a light source and a polarizer to the said fibre.

The present invention will subsequently be described, by way of example, with reference to the attached figures, in which:

Figure 1 shows a frontal view from above of the polarization-maintaining connector, according to one embodiment of the present invention.

Figure 2a shows, in a longitudinal section, the ferrule with the polarization-maintaining fibre inserted into it, according to the present invention.

Figure 2b shows, in a frontal view, the ferrule shown in Figure 2a.

Figure 3a shows, in a longitudinal section, the lock ring in which the ferrule is inserted according to the present invention.

Figure 3b shows, in a frontal view, the lock ring shown in Figure 3a.

Figure 4 shows, in a lateral view, the lock ring shown in Figures 3a and 3b.

Figure 5a shows, in a lateral view and in partial section, the plastic casing of the connector according to the present invention.

Figure 5b shows in a frontal view the casing shown in Figure 5a.

Figure 6a shows a longitudinal section of the assembled connector with the optical fibre inside it.

Figure 6b shows a frontal view of the assembled connector with the optical fibre inside it.

Figure 7a shows a transverse section of an example of a polarization-maintaining fibre with the geometrical axis of polarization emphasized.

Figure 7b shows a transverse section of a further example of a polarization-maintaining fibre.

Figure 7c shows a transverse section of a further example of a polarization-maintaining fibre.

Figure 8 shows the set of components used to implement the method for alignment with connectors of polarization-maintaining fibres disposed on the reference plane.

Figure 9 shows in particular a polarizer of the type used to carry out the alignment.

Figures 9a to 9c show schematically the successive stages of the method for the alignment of the polarization, in a polarization-maintaining fibre of the type shown by way of example in the preceding figures.

Figure 10 shows a connection between two polarization-maintaining optical fibres, made by using the polarization-maintaining connector according to the present invention.

The attached figures show an embodiment of the connector according to the present invention; this embodiment provides an example but is not restrictive, since the method is equally applicable to other types and shapes of connectors.

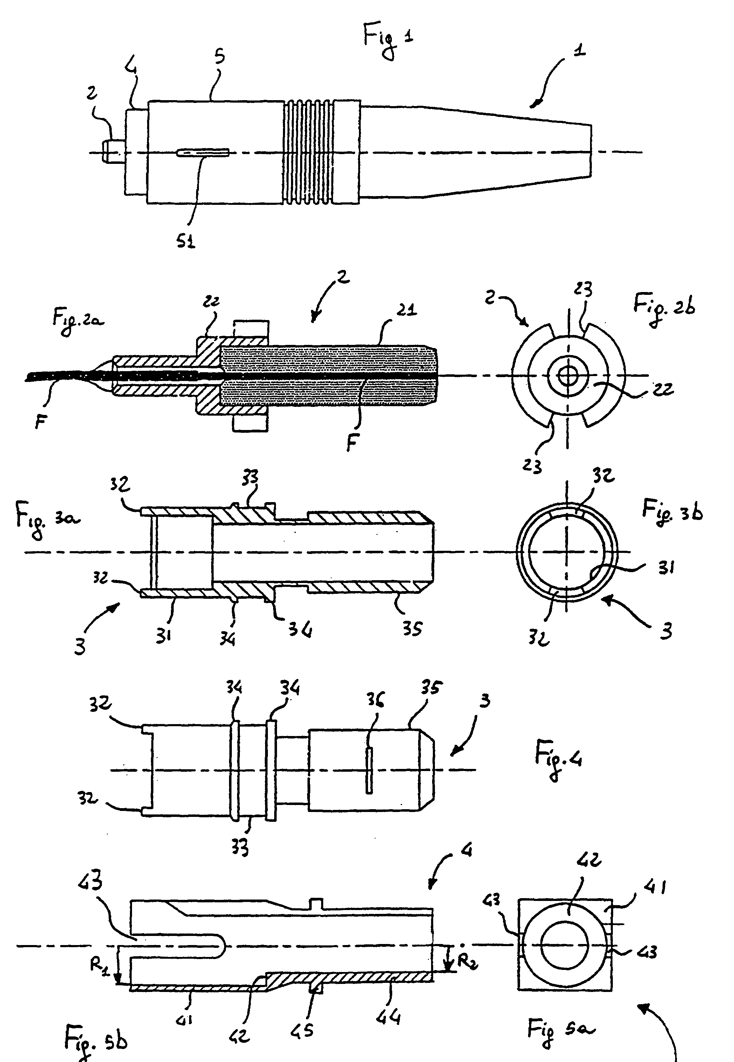

Figure 1 shows the polarization-maintaining connector as a whole, and Figures 2 to 5 show the corresponding component parts. In particular, the connector comprises a ferrule 2, inside which are fixed a polarization-maintaining fibre F, a lock, or securing, ring 3 for the ferrule 2, a first inner casing 4 for the assembly formed by the securing ring 3 and the ferrule 2, and an outer containing body 5, also called the outer casing. On the last of these, a connector key 51 is emphasized; this enables the direction of the axis of polarization of the fibre to be recognized.

Figures 2a and 2b show the ferrule 2, comprising a cylindrical body 21 made from ceramic material, with a through hole, within which is disposed the fibre F from which the corresponding protective covering (called the "coating") has been removed over at least the portion inserted into the body 21. One of the two ends of the said cylindrical body 21 is engaged in a flange 22, preferably made from metal, through which the fibre passes. The flange 22 is provided, in the area of engagement with the cylindrical body 21, with at least one notch 23 and preferably with a pair of opposing notches.

Figures 3a, 3b and 4 show the lock ring 3, comprising a cylindrical front portion 31 which has, on its free end, two opposing projections 32 which are inserted into the notches 23 of the flange 22 of the ferrule 2; a central portion 33 comprising two annular sectors 34 and a cylindrical rear portion 35 on whose lateral surface two opposing cavities 36 are formed.

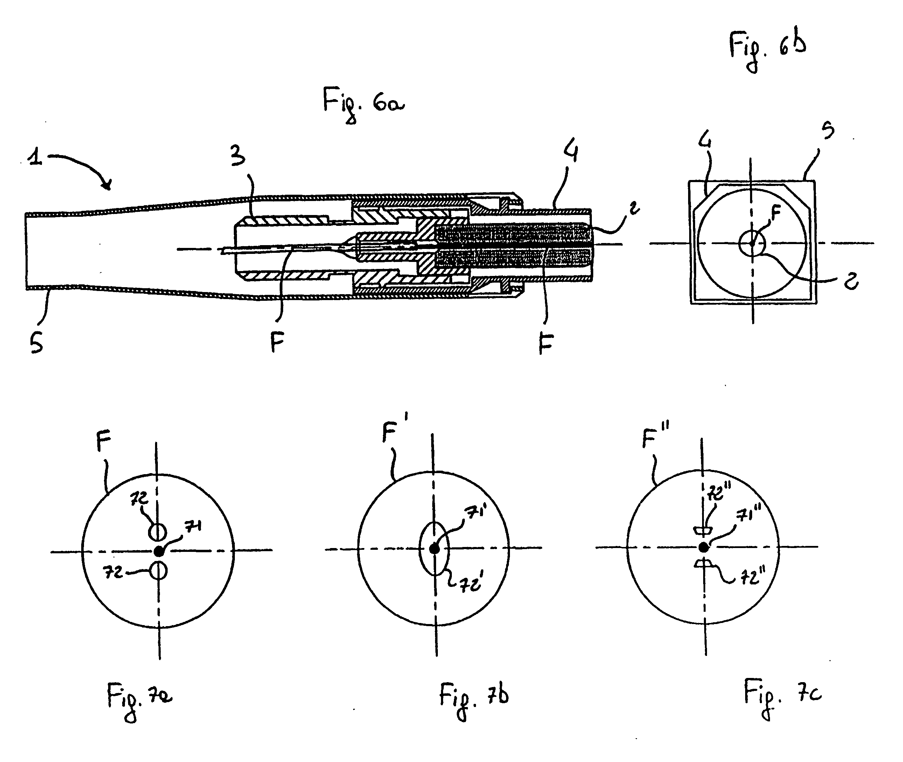

Figures 5a and 5b show the inner casing 4, which in this embodiment is made from plastic, having a tubular configuration, with a substantially prismatic outer surface, comprising a front portion 41 having a first internal radius R1 terminating at a shoulder 42 and followed by a rear portion 44 having a second internal radius R2 which is smaller than R1. On at least one of the lateral surfaces of the said portion 41 there is a longitudinal slot 43 extending over part of the length of the said portion and suitable for subsequently securing the ring 3 in the casing. Two transverse opposing stop shoulders 45 are disposed on the rear portion 44 of the casing 4.

The whole structure of the lock ring 3 has a circular symmetry such that it can be rotated inside the inner casing 4.

The connector is illustrated in detail in fully assembled form in Figure 6a.

In a first stage, the fibre, with the outer covering removed from it over a predetermined portion, is inserted into the ferrule 2; conveniently, to minimize the degradation of the ER in the assembly, the hole in the element 21 holds the fibre with a small amount of play.

For example, this may be done by choosing the ferrules in such a way that they have a diameter such that the fibre is subject to a limited amount of friction when inserted in the ferrule: this means that the ferrules which are used have a hole diameter slightly greater than the external diameter of the fibre which is used.

This play is chosen in such a way that the adhesive used to secure the fibre inside the ferrule forms the most uniform possible layer around the fibre and minimizes the residual stresses.

This choice provides the best compromise between performance in terms of ER and insertion losses (IL), since there are no errors of concentricity such that these losses are degraded.

The system for positioning the fibre inside the ferrule must be such that it prevents the bending of the fibre in the engagement area, or any stresses, which might cause a degradation of the ER of the polarized light beam propagated along the fibre. For this purpose, it is convenient, after contact has been made between the covering of the fibre and the inner walls of the ferrule, to withdraw the fibre by approximately 1 mm.

When assembled, the ferrule 2 is inserted into the lock ring 3 and kept in this position by the projections 32 of the ring which are inserted into the corresponding cavities 23 of the flange 22 of the ferrule 2.

The assembly consisting of the ferrule 2 and lock ring 3 is inserted, with the end having the projections 32 foremost, into the plastic casing 4, into the cavity whose depth is delimited by the shoulder 42 on which the flange 22 of the ferrule 2, which projects slightly from the rear part of the lock ring 3, comes to bear. In this position, the lock ring and the ferrule are free to rotate about their longitudinal axis, owing to the external circular symmetry of the lock ring 3 and the internal circular symmetry of the casing 4.

In this condition, one of the two axes of polarization of the fibre F is aligned with a reference plane, for example a horizontal plane, using the method described in detail below. This plane can be directly related to the key 51 disposed on the back of the connector 1 when the assembly of the connector is complete.

Then, when this axis of polarization has been identified, the lock ring is finally secured in the casing by inserting an adhesive, of the epoxy type for example, into the longitudinal slot 43 to fix the two parts together. Lastly, the connector is finally closed by inserting the inner casing 4 into the outer casing 5; the substantially prismatic shape of the inner casing 4 enables it to be inserted into the outer casing 5 in a single position which maintains the alignment with the key of the connector.

Figure 8 shows the set of components which are used to carry out the alignment of polarization between the fibre F and the connector 1, comprising a flat work surface 6 on which the connector 1 is positioned and with respect to which one of the two axes of polarization of the fibre is aligned. In particular, a support 61 for fixing the connector 1 on the said plane, a lens 62 for collimating the polarized beam, and a polarizer 63 mounted on a precision rotator which permits rotation both about the optical axis 67 and about an axis orthogonal to it, as schematically shown in Figure 8 by the arrows γ1 and γ2, are disposed on the plane along a horizontal axis which is parallel to the plane, is indicated by the reference number 67 in Figure 6 and is called the optical axis, an optical head 65 connected to an optical power meter 66. The said polarizer has a base which slides along a guide 64, of the high-precision dovetail type for example. The indicated components are of a known type and are not described further.

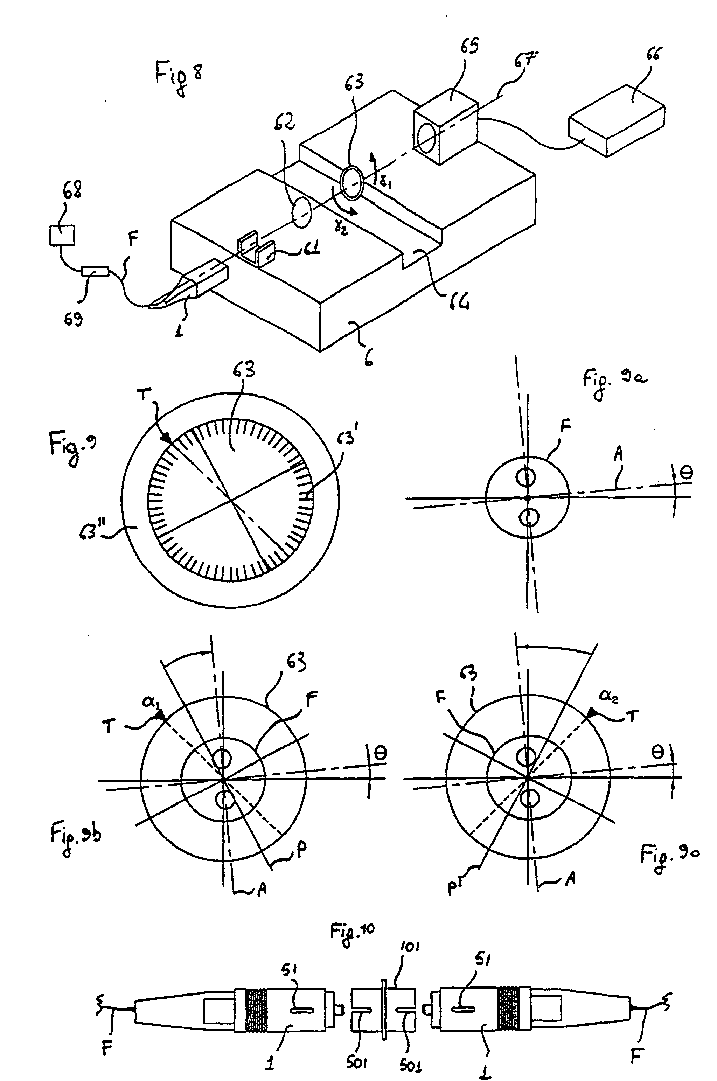

This polarizer 63 is illustrated schematically in Figure 9 and has a single axis, orientated along one of its diameters, through which the light can be propagated. When this axis is orthogonal to the polarization of the light, no light passes through the polarizer. When this axis is parallel to the polarization of the light, this light passes completely through the polarizer without loss of optical power. These axes are called the axes of maximum and minimum transmissivity. The polarizer also has a graduated scale 63' along its circumference; additionally, the rotator 63" is provided with at least one reference mark T.

The method for aligning the polarization of the fibre with the connector is based on the measurement made by the power meter 66 and on the possibility of sending along the fibre, by means of a light source 68 and a polarizer 69, a polarized optical signal which has a high extinction ratio (ER) and is orientated along one of the two axes of polarization of the said fibre.

As a function of the said signal, a light beam which is polarized, for example along the slow axis of polarization of the fibre, is emitted from the end of the fibre and consequently from the output of the connector, is directed along the optical axis 67 and is received by the power meter 66. Essentially, the method provides two separate stages which are repeated iteratively until a stage is reached at which the results do not improve further. This procedure is based on the limit set by the sensitivity of the measuring instruments, such as the rotating polarizer, which has for example a sensitivity down to 1/50 of a degree, and of the optical power meter. The method is then repeated iteratively until the optical power measuring instrument detects no more power variations at its input.

In the first stage the axis of the polarizer 63 is aligned, for example, with respect to the axis orthogonal to the flat work surface 6, and in the second stage the fibre 3 is aligned with this axis of the polarizer. The said two stages are repeated until no further improvement is obtained over the position found in the preceding step.

In particular, the method provides for the execution of the following steps, numbered progressively.
a) Sending, by means of the light source 68 and the polarizer 69, a polarized optical signal with a high extinction ratio (ER), orientated along one of the two axes of polarization of the fibre.
b) Emitting a light beam directed along the optical axis 67 from the end of the said fibre inserted in the connector.
c) Visually pre-aligning one of the two axes of polarization of the fibre, for example the slow axis, with the key of the connector, by observation under a microscope of the termination of the polarization-maintaining fibre, finding a position of this axis A which is most nearly perpendicular to the flat working surface 6; in Figure 9a, by way of example, it is assumed that an error of visual alignment equal to the angle θ has been made.
d) Measuring and recording the active power and the extinction ratio (ER) at the output of the fibre by means of the meter 66.
e) Inserting the polarizer 63 in the aforesaid guide 64 between the fibre F and the meter 66 aligned with the optical axis 67 of propagation of the beam.
f) Rotating the polarizer 63 from its random initial position P about the optical axis 67 until the minimum power is measured by the detector 66.
g) Recording this angular position following the preceding rotation as α₁, as shown in Figure 9b.
h) Rotating the polarizer mounted on its base through 180° about its vertical axis γ1, bringing its rear face in front of the connector.
i) Rotating the polarizer about the optical axis 67 from the new initial position P' until the minimum power is again reached.
l) Recording this angular position as α₂, as shown in Figure 9c.
m) Rotating the polarizer about the axis 67 from the position α₂ towards α₁ by the angular quantity (α₂ - α₁)/2 = θ which is the angle between the axis of the polarizer and the vertical axis.
n) Aligning the fibre F with the determined axis of the polarizer by rotating the ferrule of the connector about the axis 67 until the power value recorded in stage d) is substantially obtained, less a predetermined value due to the losses caused by the polarizer which are, however, small (approximately 0.1 dB) with respect to the measured values; this operation is permitted by the structure of the connector which permits the rotation of the lock ring 3 and ferrule 2 assembly inside the casing 4.
o) Repeating operations d) to n) until the value θ = (α₂ - α₁)/2 is substantially constant and minimized, or, in general, for a predetermined number of times correlated with the desired degree of precision required. The minimum value θ found in the described experiment is 1/50 of a degree.

As regards the operation executed in stage c), Figures 7a, 7b and 7c show polarization-maintaining optical fibres in which the position of the principal axes of polarization can be recognized visually. Figure 7a shows a polarization-maintaining optical fibre F in which two tensioning elements 72 of substantially circular shape are disposed symmetrically with respect to the central core 71 of the fibre. The principal fast axis of polarization in this type of fibre is orthogonal to the axis which passes through the centre of the said two stress zones, and the said fibre is referred to as the PANDA type. The axis previously defined as slow is orthogonal to the fast axis and is therefore vertical in Figure 7a.

Figure 7b represents a fibre F' in which a circular core 71' is present, surrounded by a stress element 72' of elliptical shape. The slow axis of polarization of the fibre coincides with the major axis of the said elliptical shape.

Finally, in the example shown in Figure 7c, the fibre F" comprises a circular central core 71" and two stress zones 72" of substantially trapezoidal shape, disposed symmetrically with respect to the central core. In this fibre, the slow axis of polarization passes through the central axis which passes through the two trapeziums.

In all the cited examples, it is possible, by using a microscope, to determine, although only with approximate accuracy, the fast axis of polarization and consequently the slow axis of the fibre.

It should be noted that in the described method the alignment is advantageously carried out with respect to the axis perpendicular to the axis of polarization of the light beam, defined previously as the slow axis; this method provides an angular sensitivity much higher than in the opposite case, in other words the case in which alignment is to be carried out with respect to the fast axis. In particular, polarization is determined by measuring the minimum power at the power meter input. Consequently, when the axis with the minimum optical power has been found, the maximum is also determined, which in these fibres is always orthogonal to the minimum. The method also effectively provides an alignment between the fibre and the connector even in cases in which alignment is carried out with respect to the fast axis of the fibre.

This method is applicable wherever it is possible to rotate the direction of polarization of the light beam by rotation of the fibre. For example, an optical fibre, not necessarily inserted in a connector of the type described but fixed to a mechanism which allows it to rotate about its optical axis, may be aligned with a fixed reference, in our case the flat work surface, with which a further optical or opto-electrical device, such as an optical modulator, may be aligned, in such a way that the signal issuing from the fibre is connected to this unit with maintenance of the polarization.

A further characteristic of the present invention is the separate formation of a reliable reference, consisting of the polarizer aligned with the flat work surface, which may be used subsequently to align a fibre to a connector by using the said aligned polarizer.

Finally, Figure 10 shows a connection between two fibres F, inserted in two connectors 1 of the type described above, made by means of a bush 101 provided with two identical keys 501 corresponding to the keys 51 present on the connectors 1.

This connection is an example of the use of the connector according to the present invention; similarly, it is possible to connect a fibre to an optical unit provided with an insertion bush provided with a similar key to that of the bush 101.

## Claims

1. Method of determining the axis of polarization of polarization-maintaining fibres, comprising:
- a) sending a polarized optical signal along a polarization-maintaining fibre (F);
- b) emitting said polarized optical signal from one end of the said fibre in the form of a light beam directed along an optical axis (67) and oriented along one of the two axes of polarization of the said fibre;
- c) inserting a polarizer (63) having at least one axis of maximum or minimum transmissivity between the fibre (F) and an optical power meter (66), in such a way that the optical axis (67) of propagation of the beam passes through the polarizer, and with one of the said axes oriented in a predetermined position with respect to a reference plane (6);
**characterised in that** it further comprises:
- d) rotating the said polarizer about an axis parallel to the said optical axis (67) until a minimum output power is measured by means of the optical power meter (66);
- e) recording this angular position reached by the polarizer in the preceding step;
- f) rotating the polarizer about an axis so as to bring its rear face in front of the emitting end of the fibre;
- g) rotating the polarizer about an axis parallel to the said optical axis (67) until the said minimum output power is measured;
- h) recording the angular position reached by the polarizer in the preceding step;
- i) rotating the polarizer about an axis parallel to the said optical axis (67) through an angle corresponding to half the difference between the two angles measured in the two preceding rotations;
- j) rotating the optical fibre about the optical axis (67) in such a way as to orientate one of its axes of polarization until the said minimum output power is substantially measured on the meter (66);
- k) repeating st.eps d) to j) until the angle of the rotation carried out in step i) becomes within a required degree of precision;
- 1) identifying the axis of polarization of the fibre (F) with the orientated axis of the polarizer (63).

2. Method according to Claims 1, **characterized in that** it further comprises, between steps b) and c):
- observing the end of the polarization-maintaining fibre under a microscope;
- rotating the fibre about the optical axis (67) into a position with one of the two axes of polarization substantially orthogonal to the reference plane (6).

3. Method according to Claim 1, **characterized in that** the said polarized optical signal is oriented along the slow axis of polarization of the fibre.

4. Method according to Claim 1, **characterized in that** the axis of polarization of the fibre is oriented orthogonally to the reference plane (6) and the axis of maximum transmissivity of the polarizer is aligned parallel to the reference plane (6).

5. Method according to Claim 1, **characterized in that** the said step of sending a polarized optical beam along a polarization-maintaining fibre (F) comprises connecting a light source (68) and a polarizer (69) to the said fibre (F).

## Patentansprüche

1. Verfahren zur Bestimmung der Polarisierungsachse von polarisationserhaltenden Fasern, bestehend aus folgenden Schritten:
a) Senden eines polarisierten optischen Signals entlang einer polarisationserhaltenden Faser (F);
b) Emittieren des polarisierten optischen Signals von einem Ende der Faser in Form eines Lichtstrahls entlang einer optischen Achse (67) und entlang einer der beiden Polarisationsachsen der Faser;
c) Einsetzen eines Polarisators (63) mit mindestens einer Achse maximaler oder minimaler Durchlässigkeit zwischen der Faser (F) und einem optischen Leistungsmesser (66), so dass die optische Ausbreitungsachse (67) des Strahls durch den Polarisator verläuft, und so dass eine der Achsen in Bezug auf eine Referenzfläche (6) eine festgelegte Position einnimmt;
**dadurch gekennzeichnet, dass** es ferner folgende Schritte umfaßt:
d) Rotieren des Polarisators um eine parallel zur optischen Achse (67) verlaufende Achse, bis mit dem optischen Leistungsmesser (66) eine minimale Ausgangsleistung gemessen wird;
e) Aufzeichnen der vom Polarisator im vorherigen Schritt erreichten Winkelposition;
f) Rotieren des Polarisators um eine Achse, so dass seine Rückseite sich vor dem emittierenden Ende der Faser befindet;
g) Rotieren des Polarisators um eine parallel zur optischen Achse (67) verlaufende Achse, bis die minimale Ausgangsleistung gemessen wird;
h) Aufzeichnen der im vorherigen Schritt vom Polarisator erreichten Winkelposition;
i) Rotieren des Polarisators um eine parallel zur optischen Achse (67) verlaufende Achse in einem Winkel, der der Hälfte der Differenz der beiden in den beiden vorhergehenden Rotationen gemessenen Winkel entspricht;
j) Rotieren der Lichtleitfaser um die optische Achse (67), wobei eine ihrer Polarisationsachsen ausgerichtet wird, bis mit dem Leistungsmeßgerät (66) die minimale Ausgangsleistung weitgehend gemessen wird;
k) Wiederholen der Schritte d) bis j) bis der Winkel der in Schritt i) durchgeführten Rotation einem erforderlichen Grad an Genauigkeit entspricht;
1) Gleichsetzen der Polarisationsachse der Faser (F) mit der ausgerichteten Achse des Polarisators (63).

2. Verfahren nach Anspruch 1, **dadurch gekennzeichnet, dass** es zwischen den Schritten b) und c) noch folgende Schritte umfaßt:
- Beobachten des Endes der polarisationserhaltenden Faser unter einem Mikroskop;
- Rotieren der Faser um die optische Achse (67), so dass sie in eine Position gebracht wird, in der eine der beiden Polarisationsachsen weitgehend rechtwinklig zur Referenzfläche (6) verläuft.

3. Verfahren nach Anspruch 1, **dadurch gekennzeichnet, dass** das polarisierte optische Signal entlang der langsamen Polarisationsachse der Faser verläuft.

4. Verfahren nach Anspruch 1, **dadurch gekennzeichnet, dass** die Polarisationsachse der Faser rechtwinklig zur Referenzfläche (6) verläuft und die Achse maximaler Durchlässigkeit des Polarisators parallel zur Referenzfläche (6) ausgerichtet ist.

5. Verfahren nach Anspruch 1, **dadurch gekennzeichnet, dass** der Schritt "Senden eines polarisierten optischen Strahls entlang einer polarisationserhaltenden Faser (F)" ferner den Schritt "Verbinden einer Lichtquelle (68) und eines Polarisators (69) mit der Faser (F)" enthält.

## Revendications

1. Procédé de détermination de l'axe de polarisation de fibres à maintien de polarisation, comprenant les étapes consistant à :
- a) envoyer un signal optique polarisé le long d'une fibre à maintien de polarisation (F);
- b) émettre ledit signal optique polarisé depuis une extrémité de ladite fibre sous forme d'un faisceau lumineux dirigé le long d'un axe optique (67) et orienté le long de l'un des deux axes de polarisation de ladite fibre;
- c) insérer un polariseur (63) ayant au moins un axe de transmissivité maximum ou minimum entre la fibre (F) et un mesureur de puissance optique (66), de telle manière que l'axe optique (67) de propagation du faisceau passe à travers le polariseur, et avec l'un desdits axes orienté dans une position prédéterminée par rapport à un plan de référence (6);
**caractérisé en ce qu'**il comprend en outre les étapes consistant à :
- d) faire tourner ledit polariseur autour d'un axe parallèle audit axe optique (67) jusqu'à ce qu'une puissance de sortie minimum soit mesurée au moyen du mesureur de puissance optique (66);
- e) enregistrer la position angulaire atteinte par le polariseur à l'étape précédente;
- f) faire tourner le polariseur autour d'un axe afin d'amener sa face arrière en face de l'extrémité émettrice de la fibre;
- g) faire tourner le polariseur autour d'un axe parallèle audit axe optique (67) jusqu'à ce que ladite puissance de sortie minimum soit mesurée;
- h) enregistrer la position angulaire atteinte par le polariseur à l'étape précédente;
- i) faire tourner le polariseur autour d'un axe parallèle audit axe optique (67) sur un angle correspondant à la moitié de la différence entre les deux angles mesurés dans les deux rotations précédentes;
- j) faire tourner la fibre optique autour de l'axe optique (67) de façon à orienter l'un de ses axes de polarisation jusqu'à ce que ladite puissance de sortie minimum soit sensiblement mesurée sur le mesureur (66);
- k) répéter les étapes d) à j) jusqu'à ce que l'angle de rotation utilisé à l'étape i) se trouve dans un degré de précision requis;
- 1) identifier l'axe de polarisation de la fibre (F) avec l'axe orienté du polariseur (63).

2. Procédé selon la revendication 1, **caractérisé en ce qu'**il comprend en outre, entre les étapes b) et c), les opérations consistant à :
- observer au microscope l'extrémité de la fibre à maintien de polarisation;
- faire tourner la fibre autour de l'axe optique (67) jusqu'à une position dans laquelle l'un des deux axes de polarisation est sensiblement orthogonal au plan de référence (6).

3. Procédé selon la revendication 1, **caractérisé en ce que** ledit signal optique polarisé est orienté le long de l'axe de polarisation lent de la fibre.

4. Procédé selon la revendication 1, **caractérisé en ce que** l'axe de polarisation de la fibre est orienté perpendiculairement au plan de référence (6) et l'axe de transmissivité maximum du polariseur est aligné parallèlement au plan de référence (6).

5. Procédé selon la revendication 1, **caractérisé en ce que** ladite étape d'envoi d'un faisceau optique polarisé le long d'une fibre à maintien de polarisation (F) comprend le fait de connecter une source lumineuse (68) et un polariseur (69) à ladite fibre (F).
